Europäisches Patentamt

European Patent Office

Office européen des brevets

(11) Veröffentlichungsnummer: **0 302 238**
**A1**

# EUROPÄISCHE PATENTANMELDUNG

(21) Anmeldenummer: **88110608.2**

(22) Anmeldetag: **02.07.88**

(51) Int. Cl.⁴ **A01B 59/048 , A01B 29/06**

(30) Priorität: **07.08.87 DE 8710820 U**

(43) Veröffentlichungstag der Anmeldung:
**08.02.89 Patentblatt 89/06**

(84) Benannte Vertragsstaaten:
**DE FR GB NL**

(71) Anmelder: **Rabewerk Heinrich Clausing**

**D-4515 Bad Essen 1(DE)**

(72) Erfinder: **Bohnenkamp, Wilfried, Dipl.-Ing.**
**Klusring 25**
**D-4515 Bad Essen 1(DE)**

(74) Vertreter: **Missling, Arne, Dipl.-Ing.**
**Patentanwalt Bismarckstrasse 43**
**D-6300 Giessen(DE)**

(54) Bodenbearbeitungsgerät, insbesondere Pflugnachläufer.

㊜ Das Bodenbearbeitungsgerät betrifft insbesondere einen Pflugnachläufer, der einen die Bodenbearbeitungswerkzeuge tragenden Geräterahmen aufweist. Der Geräterahmen ist über einen Dreipunktbock (11) mit einem Turm (11a) für den Anschluß der Oberlenker und einer Querachse für den Anschluß der Unterlenker eines Dreipunktgestänges eines Schleppers ausgebildet. Um einen derartigen Pflugnachläufer auch als Frontgerät einsetzen zu können, wobei eine gute Lenkbarkeit sowie eine kurze Bauweise gewährleistet ist, weist der Dreipunktbock (11) eine Querachse (15, 39) auf, die die Anschlußpunkte (16a, 16b) für die Unterlenker des Schleppers aufweist. Die Querachse (15, 39) ist in Langlöchern (14) auf am Geräterahmen (4) angebrachten Konsolen (13a, 13b) verschiebbar gehalten und durch zwei Lenker (19, 20) geführt, die die Querachse (15, 39) mit dem Geräterahmen (4) verbinden.

FIG 2

## Bodenbearbeitungsgerät, insbesondere Pflugnachläufer

Die Erfindung betrifft ein Bodenbearbeitungsgerät, insbesondere Pflugnachläufer, gemäß dem Oberbegriff des Anspruches 1.

Bodenbearbeitungsgeräte der eingangs genannten Art sind bekannt. Des weiteren sind Bodenbearbeitungsgeräte für den Frontanbau aus der DE-OS 36 07 691 bekannt, bei dem eine Einrichtung so zwischen dem Schlepper und dem Vorlaufgerät angeordnet ist, daß der ideelle Führungspunkt bzw. der Momentanpol vor dem zentralen Kraftangriffspunkt des Vorlaufgerätes, vorzugsweise vor dem gesamten Vorlaufgerät liegt.

Diese Einrichtung besteht im wesentlichen aus einem Lenkergetriebe, das zwischen dem Dreipunktbock des Vorlaufsgerätes und dem Dreipunktgestänge des Schleppers angeordnet ist. Diese Einrichtung ist ein zusätzliches Bauteil, das zum einen die Baulänge des Vorlaufsgerätes verlängert und zum anderen immer dann abgebaut werden muß, wenn das Vorlaufgerät vom Schlepper von und zu seinem Einsatzgebiet transportiert werden muß.

Ein weiteres Bodenbearbeitungsgerät für den Anbau an die Frontseite eines Schleppers ist aus der DE-PS 34 19 174 bekannt. Es hat einen Geräterahmen, der die Bodenbearbeitungswerkzeuge trägt, und einen Tragrahmen, der mit der Frontseite des Schleppers, vorzugsweise einem dort angebrachten Dreipunktgestänge, verbindbar ist und an dem der Geräterahmen derart beweglich aufhängbar ist, daß er relativ zum Tragrahmen um eine vertikale Achse und eventuell auch um eine horizontale, in Fahrtrichtung verlaufende Achse schwenken kann, und eine Rückstellvorrichtung, die einerseits am Tragrahmen und andererseis am Geräterahmen angreift und versucht, den Geräterahmen mittig auf den Tragrahmen auszurichten.

Diese Rückstellvorrichtung besteht aus einem in Fahrtrichtung gesehen vorn am Vorlaufgerät angeordneten Lenkergetriebe, das eine Basis am Trägerrahmen und eine Basis am Geräterahmen hat. Die Rückstellvorrichtung weist einen ideellen Zugpunkt auf, der ein erhebliches Stück vor den Getriebegliedern liegt. Der Vorteil dieser Anordnung besteht in der besseren Lenkbarkeit des Vorlaufgerätes.

Ein Nachteil dieses Gerätes besteht darin, daß die Baulänge des Anbaugerätes durch das Lenkergetriebe nicht unerheblich verlängert wird.

Der Erfindung liegt die Aufgabe zugrunde, ein Bodenbearbeitungsgerät, insbesondere einen Pflugnachläufer, der eingangs genannten Art vorzuschlagen, das sowohl als Nachlaufgerät als auch als Vorlaufgerät einsetzbar ist, bei kostengünstiger Herstellung eine kurze Bauweise aufweist und darüberhinaus eine gute Lenkbarkeit hat.

Diese Aufgabe wird mit den Merkmalen des Anspruches 1 gelöst.

Weitere Ausgestaltungen der Erfindung ergeben sich aus den Unteransprüchen 2 bis 22.

Die mit der Erfindung erzielten Vorteile bestehen insbesondere darin, daß sich das Bodenbearbeitungsgerät nicht nur als ein vielseitig verwendbares Vorlaufgerät eignet, sondern auch für Drehpflüge und in Form eines sogenannten Wendepackers als Nachlaufgerät eingesetzt werden kann. Die Lenker der Einrichtung können, falls das Gerät als Frontpacker verwendet werden soll, leicht umgerüstet werden. Auch konstruktionsmäßig ist das Bodenbearbeitungsgerät gemäß der Erfindung gegenüber den bekannten Geräten einfacher im Aufbau und damit kostengünstiger herstellbar. Die äußeren Abmessungen des Bodenbearbeitungsgerätes wie auch des Vorlaufgerätes können sehr klein gehalten werden.

Ein Ausführungsbeispiel der Erfindung ist im folgenden anhand der Zeichnung näher beschrieben. In dieser zeigen:

Fig. 1 eine Seitenansicht einer ersten Ausführungsform des erfindungsgemäßen Bodenbearbeitungsgerätes,

Fig. 2 eine Draufsicht auf die in Fig. 1 dargestellte erste Ausführungsform des erfindungsgemäßen Bodenbearbeitungsgerätes,

Fig. 3 eine Draufsicht auf Teile der in den Fig. 1 und 2 veransschaulichten ersten Ausführungsform des erfindungsgemäßen Bodenbearbeitungsgerätes mit verschwenkter Querachse.

Fig. 4 eine vergrößerte Draufsicht auf eine zweite Ausführungsform des erfindungsgemäßen Bodenbearbeitungsgerätes,

Fig. 5 eine vergrößerte Draufsicht auf eine dritte Ausführungsform des erfindungsgemäßen Bodenbearbeitungsgerätes,

Fig. 6 eine Draufsicht auf eine vierte Ausführungsform des erfindungsgemäßen Bodenbearbeitungsgerätes,

Fig. 7 eine Seitenansicht einer fünften Ausführungsform des erfindungsgemäßen Bodenbearbeitungsgerätes mit am Geräterahmen einer Packerwalze angebrachten Lenkern und

Fig. 8 eine Draufsicht auf die in Fig. 7 dargestellte fünfte Ausführungsform des erfindungsgemäßen Bodenbearbeitungsgerätes.

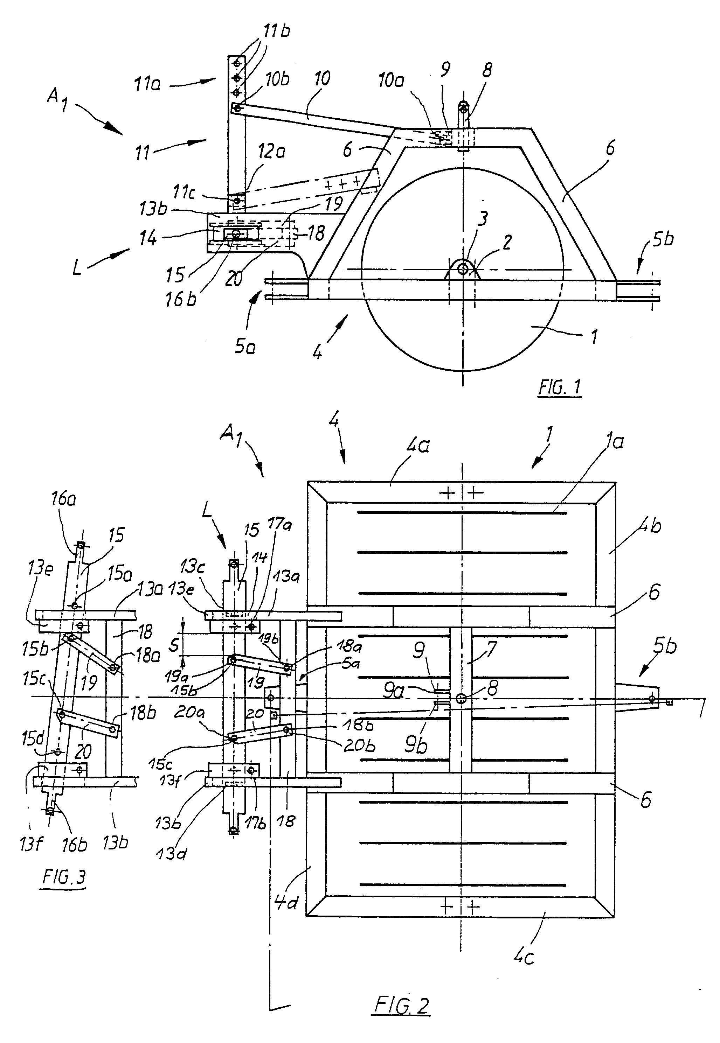

Die Fig. 1 zeigt in einer Seitenansicht eine erste Ausführungsform A₁ des erfindungsgemäßen Bodenbeaerbeitungsge rätes, das dort als Vorlaufgerät eingesetzt ist. Das Bodenbearbeitungsgerät besteht aus einer in einem Geräterahmen 4 gehalterten Packerwalze 1, die mehrere Packerringe 1a aufweist, welche auf einer in Lagern 2 gelagerten Welle 3 befestigt sind. Der Geräterahmen 4 setzt sich bei dieser Ausführungsform aus den Rahmenteilen 4a, 4b, 4c und 4d (Fig. 2) zusammen und hat zwei Bügel 6, welche die Seitenteile 4b und 4d miteinander verbinden.

Die Bügel 6 werden durch eine Traverse 7 auf Abstand gehalten, wobei die Traverse 7 einen Zapfen 8 zum Anschluß einer nicht gezeigten Deichsel für eine Folgewalze eines sogenannten Wendepackers und ein Gelenk 9 mit Befestigungspunkten 9a und 9b zum Anlenken einer Strebe 10 mit einem Gelenkpunkt 10a aufweist. An den Rahmenteilen 4b und 4d sind mittig Konsolen 5a und 5b für Fangarme zum Anschließen an einen Drehpflug vorgesehen.

Die Strebe 10 hat einen weiteren Gelenkpunkt 10b, mit dem die Strebe 10 an einem der Löcher 11b für einen Turm 11a eines aus zwei Flacheisen bestehenden Dreipunktbocks 11 anlenkbar ist. Der Dreipunktbock 11 hat im unteren Abschnitt Bohrungen 11c. An Innenseiten der Konsolen 13a und 13b sind Konsolplatten 13e und 13f mit Bohrungen 17a und 17b versehen, die, wie aus der Fig. 2 zu ersehen ist, zum Feststecken der vorzugsweise rechteckigen Querachse 15 für eine Transportstellung dienen. An Enden der Querachse 15 sind Zapfen 16a und 16b zum Ankoppeln an ein nicht gezeigtes Front-Dreipunktgestänge eines Schleppers angeordnet.

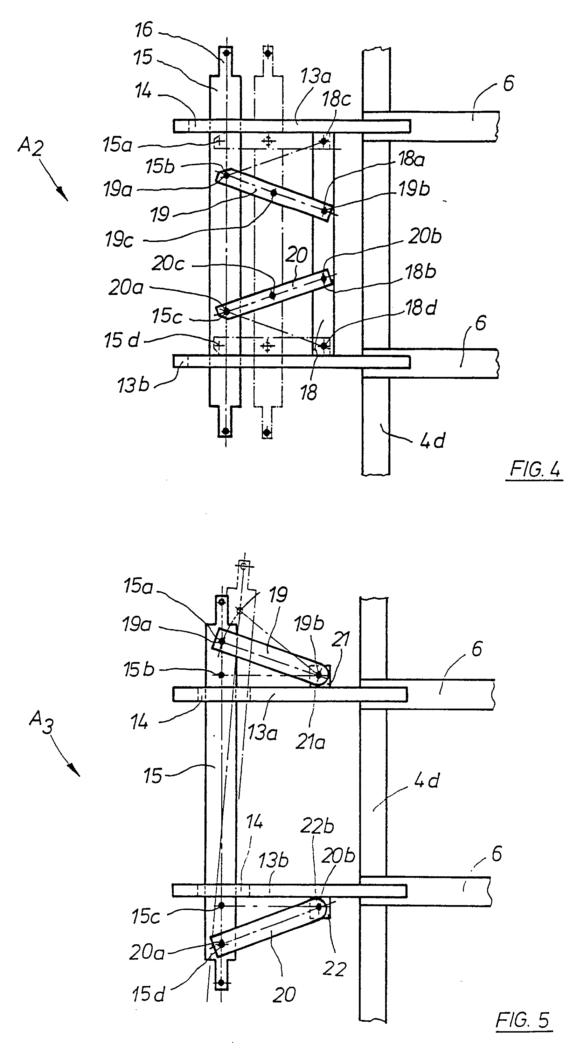

Der Kern des erfindungsgemäßen Bodenbearbeitungsgerätes ist, wie die Fig. 2 deutlich zeigt, die Einrichtung für das Lenkergetriebe L, welche in an dem Geräterahmen 4 befestigten Konsolen 13a und 13b angebracht ist und aus einer in einem Langloch 14 verschwenk- und verschiebbaren, im Querschnitt z.B. rechteckigen Querachse 15 mit Gelenkbohrungen 15a, 15b, 15c und 15d (Fig. 3) sowie daran angelenkten Lenkern 19 und 20 besteht. Zwischen den Konsolen 13a und 13b ist bevorzugt eine Brücke 18 mit einer Reihe von Gelenkbohrungen 18a, 18b, 18c und 18d (Fig. 4) vorgesehen, an denen die Lenker 19 und 20 mit ihren Gelenkpunkten 19b und 20b anlenkbar sind. Die Fig. 2 zeigt im einzelnen deutlich, daß der eine Lenker 19 mit einem Gelenkpunkt 19a an der Gelenkbohrung 15b der Querachse 15, mit seinem Gelenkpunkt 19b dagegen an der Gelenkbohrung 18a der Brücke 18 und der andere Lenker 20 mit seinem Gelenkpunkt 20a an der Gelenkbohrruung 15c der Querachse 15, mit seinem anderen Gelenkpunkt 20b hingegen an der Gelenkbohrung 18b der Brücke 18 angelenkt ist, so daß sich ein größter Schwenkbereich S für die Querachse 15 ergibt.

Die Fig. 3 zeigt in einer Draufsicht die in den Fig. 1 und 2 veranschaulichte erste Ausführungsform A₁ des erfindungsgemäßen Bodenbearbeitungsgerätes mit der verschwenkten und verschobenen rechteckigen Querachse 15 und weggebrochenen Teilen der Konsolen 13a, 13b in Richtung auf den Geräterahmen 4. An Enden der Querachse 15 sind, wie bereits ausgeführt, Zapfen 16a und 16b zum Ankoppeln an ein nicht gezeigtes Front-Dreipunktgestänge eines Schleppers angeordnet. Da die anderen in der Fig. 3 gezeigten Bauteile der Einrichtung für das Lenkergetriebe L die gleichen wie in der Fig. 2 sind, erübrigen sich hierzu weitere Erläuterungen.

Die Fig. 4 veranschaulicht in einer vergrößerten Draufsicht eine zweite Ausführungsform A₂ des erfindungsgemäßen Bodenbearbeitungsgerätes, wobei die Rahmenteile 4a, 4b und 4c des Geräterahmens 4 und teilweise die Bügel 6 weggebrochen sind. Auch hier sind, wie in der ersten Ausführungsform, die Konsolen 13a und 13b an den Bügeln 6 bzw. am Rahmen 4 angeschweißt. Die Lenker 19 und 20 weisen mittig weitere Gelenkpunkte 19c und 20c auf und sind an den Innenseiten der Konsolen 13a und 13b anlegbar, so daß nach ihrem Anlegen die Querachse 15 durch die Lenker 19 und 20 feststeckbar ist.

Eine vergrößerte Draufsicht auf eine dritte Ausführungsform A₃ des erfindungsgemäßen Bodenbearbeitungsgerätes ist in der Fig. 5 dargestellt, wobei, wie in Fig. 4, Rahmenteile weggebrochen und die Konsolen 13a und 13b an den Bügeln 6 des Rahmens 4 angeschweißt sind. An Außenseiten der Konsolen 13a und 13b sind hier zwischen dem Rahmenteil 4d des Geräterahmens 4 und der Querachse 15 Halter 21 und 22 mit Gelenkbohrungen 21a und 22b angebracht, an denen die Lenker 19 und 20 mit ihren Gelenkpunkten 19b und 20b anlenkbar sind. Die Lenker 19 und 20 sind an den Außenseiten der Konsolen 13a und 13b anlegbar und können dann nach Anlegen mit der Querachse 15 festgesteckt werden.

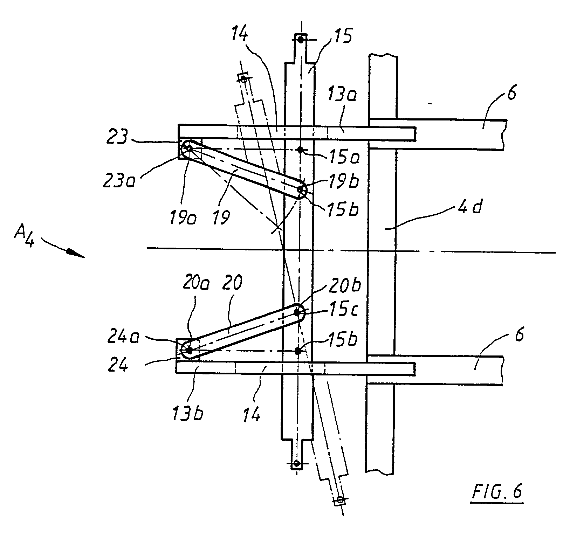

Die Fig. 6 zeigt in einer vergrößerten Draufsicht eine vierte Ausführungsform A₄ des erfindungsgemäßen Bodenbearbeitungsgerätes, wobei Rahmenteile und die Bügel 6, wie in den Fig. 4 und 5, weggebrochen sind. Auch bei dieser Ausführungsform A₄ sind die Konsolen 13a und 13b an den Bügeln 6 angeschweißt. Der Unterschied gegenüber der dritten Ausführungsform A₃ besteht jedoch darin, daß hier an Enden der Innenseiten der Konsolen 13a und 13b, und zwar hinter der Querachse 15 in Richtung zum Schlepper, Halter 23 und 24 mit Gelenkbohrungen 23a und 24a angebracht sind, an denen die Lenker 19 und 20 mit ihren Gelenkpunkten 19a und 20a anlenkbar sind. Auch hier können die Lenker 19 und 20 an den Innenseiten der Konsolen 13a und 13b angelegt und nach ihrem Anlegen mit der Querachse 15 festgesteckt werden.

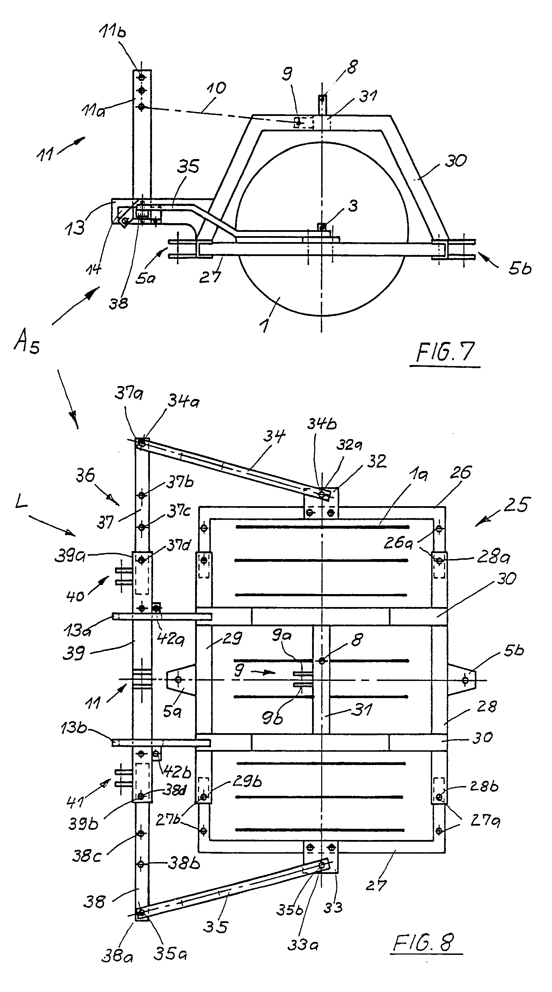

Die Fig. 7 zeigt in einer Seitenansicht eine fünfte Ausführungsform A₅ des erfindungsgemäßen Bodenbearbeitungsgerätes. Auch hier sind die Konsolen 13a und 13b an zu einem Geräterahmen 25 gehörenden Bügeln 30 angeschweißt. Die Konsolen 13a und 13b haltern die in ihnen verschwenk- und verschiebbare, vorzugsweise rechteckige Querachse 36 des Lenkergetriebes L, die aus linken und rechten Achsenteilen 37 und 38 sowie aus einem mittleren Achsenteil 39 besteht. Die linken und rechten Achsenteile 37 und 38 weisen eine Reihe von Bohrungen 37a bis 37d und 38a bis 38d auf, wobei an den Bohrungen 37a und 38a Gelenkpunkte 34a und 35a von Lenkern 34 und 35 der Einrichtung für das Lenkergetriebe L anlenkbar sind.

Die linken und rechten Achsenteile 37 und 38 sind in das mittlere Achsenteil 39 einschiebbar und können hier in verschiedenen Stellungen mit Bohrungen 39a und 39b des mittleren Achsenteils 39 zur Anpassung an verschiedene Gerätebreiten verankert werden. Am mittleren Achsenteil 39 sind mittig der Dreipunktbock 11 und seitlich davon zugehörige Anschlußpunkte 40 und 41 angeordnet. Die Querachse 36 ist durch Feststecken mittels der Augen 42a und 42b, die an den Konsolen 13a und 13b angebracht sind, wie bei den anderen Figuren für eine Transportstellung feststeckbar.

Der Geräterahmen 25 besteht aus einem linken Rahmenteil 26 mit Bohrungen 26a und 26b, einem rechten Rahmenteil 27 mit Bohrungen 27a und 27b sowie aus einem vorderen Rahmenteil 28 mit Bohrungen 28a und 28b und einem hinteren Rahmenteil 29 mit Bohrungen 29a und 29b, wobei die linken und rechten Rahmenteile 26 und 27 in die vorderen und hinteren Rahmenteile 28 und 29 einsteckbar und durch Einsetzen von nicht dargestellten Bolzen in die betreffenden Bohrungen der Rahmenteile 28 und 29 bzw. 26 und 27 verankerbar sind, wodurch verschiedene Gerätebreiten verwirklicht werden können. Am hinteren und vorderen Rahmenteil 28 un 29 sind mittig die Konsolen 5a und 5b angebracht.

Zwischen den am Geräterahmen 25 angebrachten Bügeln 30 ist eine Traverse 31 vorgesehen, an der, wie in der ersten Ausführungsform A₁ des erfindungsgemäßen Bodenbearbeitungsgerätes, das Gelenk 9 mit den Befestigungspunkten 9a und 9b zum Anlenken an die Strebe 10 und den Zapfen 8 für eine nicht dargestellte Deichsel, an der beispielsweise ein Folgegerät ankoppelbar ist, angebracht sind.

## Ansprüche

1. Bodenbearbeitungsgerät, insbesondere Pflugnachläufer, mit einem Bodenbearbeitungswerkzeuge tragenden Geräterahmen, mit einem Dreipunktbock aus einem Turm für den Anschluß eines Oberlenkers und einer Querachse für den Anschluß der Unterlenker eines Dreipunktgestänges eines Schleppers, dadurch gekennzeichnet, daß die Querachse (15) für den Anschluß der Unterlenker in im wesentlichen horizontal ausgebildeten Langlöchern (14) von am Geräterahmen (4) befestigten Konsolen (13a, 13b) verschiebbar ist und durch Lenker (19, 20; 34, 35) geführt ist, die die Querachse (15, 39) mit dem Geräterahmen (4) verbinden.

2. Bodenbearbeitungsgerät nach Anspruch 1, dadurch gekennzeichnet, daß der Turm (11a) auf den Konsolen (13a, 13b) abgestützt ist.

3. Bodenbearbeitungsgerät nach Anspruch 1, dadurch gekennzeichnet, daß der Turm (11a) auf der Querachse (15, 39) abgestützt ist.

4. Bodenbearbeitungsgerät nach einem der Ansprüche 1 bis 3, dadurch gekennzeichnet, daß die Querachse (15, 39) mit einem rechteckigen Querschnitt ausgebildet ist.

5. Bodenbearbeitungsgerät nach einem der Ansprüche 1 bis 4, dadurch gekennzeichnet, daß zwischen den Konsolen (13a, 13b) eine Brücke (18) angeordnet ist, wobei die Brücke (18) eine Reihe von Gelenkbohrungen (18a, 18b, 18c, 18d) aufweist, an denen die Lenker (19, 20) mit ihren Gelenkpunkten (19b, 20b) anlenkbar sind.

6. Bodenbearbeitungsgerät nach einem der Ansprüche 1 bis 5, dadurch gekennzeichnet, daß der eine Lenker (19) mit einem Gelenkpunkt (19a) an der Gelenkbohrung (15b) der Querachse (15), mit seinem Gelenkpunkt (19b) dagegen an der Gelenkbohrung (18a) der Brücke (18) und der andere Lenker (20) mit dem Gelenkpunkt (20a) an der Gelenkbohrung (15c) der Querachse (15), mit seinem Gelenkpunkt (20b) hingegen an der Gelenkbohrung (18b) der Brücke (18) angelenkt ist, so daß sich ein größter Schwenkbereich (S) für die Querachse (15) ergibt.

7. Bodenbearbeitungsgerät nach Anspruch 1, dadurch gekennzeichnet, daß an Innenseiten der Konsolen (13a, 13b) Konsolplatten (13e, 13f) mit Bohrungen (17a, 17b) zum Feststecken der Zapfen (16a, 16b) tragenden Querachse (15) vorgesehen sind.

8. Bodenbearbeitungsgerät nach einem der Ansprüche 1 bis 6, dadurch gekennzeichnet, daß an den Konsolen (13a, 13b) Laschen (13c, 13d) zur Aufnahme eines aus zwei Flacheisen bestehenden Dreipunktbockes (11) vorgesehen sind.

9. Bodenbearbeitungsgerät nach den Ansprüchen 1 und 8, dadurch gekennzeichnet, daß der Dreipunktbock (11) einen Turm (11a) mit Löchern (11b) und eine Bohrung (11c) aufweist, wobei jeweils eines der Löcher (11b) zur Aufnahme eines Gelenkpunktes (10b) einer Strebe (10), ein anderer Gelenkpunkt (10a) der Strebe (10) zum Befestigen an einem Gelenk (9) mit den Befestigungspunkten (9a, 9b) dient, welches an einer zwischen den Bügeln (6) des Geräterahmens (4) vorgesehenen Traverse (7) angebracht ist.

10. Bodenbearbeitungsgerät nach Anspruch 9, dadurch gekennzeichnet, daß an der Traverse (7) ein Zapfen (8) zum Anschließen an eine Deichsel eines Wendepackers angebracht ist.

11. Bodenbearbeitungsgerät nach einem der Ansprüche 1 bis 10, dadurch gekennzeichnet, daß am Geräterahmen (4) Konsolen (5a 5b) für Fangarme zum Ankoppeln an Drehpflüge vorgesehen sind.

12. Bodenbearbeitungsgerät nach den Ansprüchen 1 bis 3, dadurch gekennzeichnet, daß die Lenker (19, 20) in ihrer Mitte weitere Gelenkpunkte (19c, 20c) aufweisen und daß die Lenker (19, 20) an den Innenseiten der Konsolen (13a, 13b) anlegbar und nach ihrem Anlegen die Querachse (15) durch die Lenker (19, 20) feststeckbar sind.

13. Bodenbearbeitungsgerät nach einem der Ansprüche 1 bis 12, dadurch gekennzeichnet, daß an Außenseiten der Konsolen (13a, 13b) zwischen dem Rahmenteil (4d) des Geräterahmens (4) und der rechteckigen Querachse (15) Halter (21, 22) mit Gelenkbohrungen (21a, 22a) angebracht sind, an denen die Lenker (19, 20) mit ihren Gelenkpunkten (19b, 20b) anlenkbar sind.

14. Bodenbearbeitungsgerät nach Anspruch 13, dadurch gekennzeichnet, daß die Lenker (19, 20) an den Außenseiten der Konsolen (13a, 13b) anlegbar sind und daß nach ihrem Anlegen die Querachse (15) durch die Lenker (19, 20) fststeckbar ist.

15. Bodenbearbeitungsgerät nach einem der Ansprüche 1 bis 14, dadurch gekennzeichnet, daß an Enden der Innenseiten der Konsolen (13a, 13b) hinter der Querachse (15) Halter (23, 24) mit Gelenkbohrungen (23a, 24a) angebracht sind, an denen die Lenker (19, 20) mit ihren Gelenkpunkten (19a, 20a) anlenkbar sind.

16. Bodenbearbeitungsgerät nach einem der Ansprüche 1 bis 15, dadurch gekennzeichnet, daß die Lenker (19, 20) an den Innenseiten der Konsolen (13a, 13b) anlegbar sind und daß nach ihrem Anlegen die Querachse (15) durch die Lenker (19, 20) feststeckbar ist.

17. Bodenbearbeitungsgerät nach einem der Ansprüche 1 bis 16, dadurch gekennzeichnet, daß ein Teil der Einrichtung für das Lenkergetriebe (L) in den an von einem Geräterahmen (25) getragenen Bügeln (30) befestigten Konsolen (13a, 13b) angebracht ist und daß die Querachse (36) aus linken und rechten Achsenteilen (37, 38) und aus einem mittleren Achsenteil (39) besteht, an dem mittig der Dreipunktbock (11) und seitlich davon Anschlußpunkte (40, 41) für Unterlenker des Schleppes angeordnet sind und daß die linken und rechten Achsenteile (37, 38) in das mittlere Achsenteil (39) einschiebbar und durch Bohrungen (39a, 39b) im mittleren Achsenteil (39) verankerbar sind.

18. Bodenbearbeitungsgerät nach Anpsruch 17, dadurch gekennzeichnet, daß die linken und rechten Achsenteile (37, 38) der Achse (36) eine Reihe von Bohrungen (37a bis 37d und 38a bis 38d) aufweisen, wobei an den Bohrungen (37a, 38a) Gelenkpunkte (34a, 35a) der Lenker (34, 35) anlenkbar sind.

19. Bodenbearbeitungsgerät nach den Ansprüchen 1 und 18, dadurch gekennzeichnet, daß die Lenker (34, 35) in seitlich am Geräterahmen (25) vorgesehenen Haltern (32, 33) gehaltert sind, wobei Gelenkpunkte (34b, 35b) der Lenker (34, 35) an Bohrungen (32a, 33a) der Halter (32, 33) angelenkt sind.

20. Bodenbearbeitungsgerät nach einem der Ansprüche 1 bis 19, dadurch gekennzeichnet, daß der Geräterahmen (25) aus linken und rechten Rahmenteilen (26, 27) mit Bohrungen (26a, 26b; 27a, 27b) und vorderen und hinteren Rahmenteilen (28, 29) mit Bohrungen (28a, 28b; 29a, 29b) besteht, wobei die linken und rechten Rahmenteile (26, 27) in die vorderen und hinteren Rahmenteile (28, 29) einschiebbar und durch die Bohrungen (28a, 28b; 29a, 29b) verankerbar sind.

21. Bodenbearbeitungsgerät nach einem der Ansprüche 1 bis 20, dadurch gekennzeichnet, daß die Verschwenk- und Verschiebbarkeit der Querachse (36) durch Feststecken an in den Konsolen (13a, 13b) angebrachten Augen (42a, 42b) aufhebbar ist.

22. Bodenbearbeitungsgerät nach einem der Ansprüche 1 bis 21, dadurch gekennzeichnet, daß zwischen den am Geräterahmen (25) angebrachten Bügeln (30) eine Traverse (31) vorgesehen ist, an der das Gelenk (9) mit den Befestigungspunkten (9a, 9b) zum Anlenken an der Strebe (10) und der Zapfen (8) für eine Deichsel angebracht sind.

_FIG. 1_

_FIG.3_

_FIG. 2_

FIG. 4

FIG. 5

FIG. 6

FIG.7

FIG.8

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A,D | GB-A-2 175 484 (PFLUGFABRIK LEMKEN KG) & DE-A-3 607 691 --- | | A 01 B 59/048 A 01 B 29/06 |
| A,D | DE-A-3 419 174 (RABEWERK HEINRICH CLAUSING) --- | | |
| A | NL-C- 109 474 (VAN DER LELY) --- | | |
| A | DE-C- 937 381 (PFLUGFABRIK LEMKEN KG) --- | | |
| A | FR-A-1 222 300 (NASSAUISCHE PFLUGFABRIK WAGNER & CO.) ----- | | |

**RECHERCHIERTE SACHGEBIETE (Int. Cl.4)**

A 01 B

Der vorliegende Recherchenbericht wurde für alle Patentansprüche erstellt

| Recherchenort | Abschlußdatum der Recherche | Prüfer |
|---|---|---|
| DEN HAAG | 15-11-1988 | VON ARX V.U. |